# EUROPÄISCHE PATENTSCHRIFT

(11) **EP 0 972 334 B1**
(45) Veröffentlichungstag und Bekanntmachung des Hinweises auf die Patenterteilung: **27.06.2001**
(21) Anmeldenummer: 98928106.8
(22) Anmeldetag: 01.04.1998
(51) Int. Cl.: H02M 1/00, H02M 3/335

(54) **SCHALTNETZTEIL MIT REGELUNG DER NETZSTROMAUFNAHME**
SWITCHED-MODE POWER SUPPLY WITH REGULATION OF LINE CURRENT CONSUMPTION
ALIMENTATION A DECOUPAGE AVEC REGULATION DE LA CONSOMMATION DU COURANT DU SECTEUR

(30) Priorität: 03.04.1997 DE 19713814
(43) Veröffentlichungstag der Anmeldung: 19.01.2000
(73) Patentinhaber: Infineon Technologies AG, 81669 München (DE)
(72) Erfinder: FELDTKELLER, Martin, D-81543 München (DE)
(74) Vertreter: Zedlitz, Peter, Dipl.-Inf.
(86) Internationale Anmeldenummer: DE9800924
(87) Internationale Veröffentlichungsnummer: WO9845930

(56) Entgegenhaltungen:
- EP-A- 0 308 642
- EP-A- 0 664 602
- US-A- 5 515 257
- US-A- 5 617 306

## Beschreibung

Die vorliegende Erfindung betrifft ein Schaltnetzteil mit Regelung der Netzstromaufnahme, das unter anderem folgende Merkmale aufweist:
(a) mindestens einem Power-Factor-Controller,
   (a1) der eine Leistungsregelanordnung zur Regelung der Netzstromaufnahme und eine Gleichrichteranordnung aufweist,
   (a2) mit zwei Eingangsanschlüssen, an welchen eine Netzspannung in das Schaltnetzteil einkoppelbar ist und
   (a3) mit zwei Ausgangsklemmen, an welchen eine Bus-Spannung abgreifbar ist,
(b) einen an den Ausgangsklemmen der Gleichrichteranordnung angeschlossenen Schaltregler, an dessen Ausgangsklemmen eine Ausgangsspannung abgreifbar ist,
(c) eine dem Schaltregler nachgeschaltete, zwischen dessen Ausgangsklemmen angeordnete Last.

Aufgabe derartiger bekannter Schaltnetzteile ist es, eine möglichst konstante Gleichspannung an den Ausgangsklemmen des Schaltreglers bei möglichst sinusförmiger Netzstromaufnahme zur Verfügung zu stellen. Die Forderung nach einer sinusförmigen Netzstromaufnahme derartiger Schaltnetzteile ergibt sich aus einer Verordnung der EG, wonach Netzteile, beispielsweise für Computer bei einer Leistungsaufnahme von mehr als 75W eine möglichst sinusförmige Netzstromaufnahme gewährleisten müssen.

Aufgabe der Leistungsregelanordnung ist es, einerseits eine sinusförmige Netzstromaufnahme an deren Anschlußklemmen zu bewirken und andererseits die über die Ausgangsklemmen der Leistungsregelanordnung an die Gleichrichteranordnung abgegebene Leistung so zu regeln, daß an den Ausgangsklemmen der Gleichrichteranordnung eine möglichst konstante Bus-Spannung, auch bei schwankender Last an den Ausgangsklemmen des Schaltreglers, zur Verfügung steht. Der der Gleichrichteranordung nachgeschaltete Schaltregler erzeugt aus der Bus-Spannung eine heruntertransformierte, netzgetrennte und kurzschlußfeste Ausgangsspannung für an dessen Ausgangsklemmen angeschlossene Verbraucher. Aufgabe der ersten Meßanordung ist es, ein von der Bus-Spannung abhängiges erstes Bus-Spannungssignal zur Verfügung zu stellen, welches über einen ersten Rückkopplungszweig an die Leistungsregelanordnung zur Regelung der abgegebenen Leistung in Abhängigkeit von der Bus-Spannung zurückgekoppelt ist. Der erste Rückkopplungszweig enthält bei derartigen Schaltnetzteilen üblicherweise einen Integrierer mit langer Zeitkonstante, um die Einflüsse einer unvermeidlichen Restwelligkeit der Bus-Spannung bei der Regelung der von der Leistungsregelanordnung abgegebenen Leistung zu eliminieren.

Nachteilig bei derartigen Schaltnetzteilen ist, daß die Bus-Spannung bei Absinken der Last an den Ausgangsklemmen des Schaltreglers stark ansteigt, bevor die Leistungsregelanordnung, bedingt durch die Integration des von der Bus-Spannung abhängigen Bus-Spannungssignals, die abgegebene Leistung zurückregelt. Derartige Schaltnetzteile benötigen deshalb eine Überspannungsabschaltung, die die Leistungsregelanordnung aussschaltet, wenn die Bus-Spannung einen Sollwert um einen vorgegebenen Wert überschreitet, um damit die an den Ausgangsklemmen der Gleichrichteranordnung angeschlossenen Bauteile vor Zerstörung zu schützen. Hieraus ergibt sich, daß die Leistungsregelanordnung unter Umständen für mehrere Sekunden abschaltet, was insbesondere dann ungünstig ist, wenn über die Leistungsregelanordnung eine integrierte Schaltung versorgt wird, welche beispielsweise die Steuerlogik für die Leistungsregelanordnung oder den Schaltregler enthält.

Aus der US 5,515,257 ist ein AC-DC-Konverter bekannt, der einen Power-Factor-Controller mit einer Leistungsregelanordnung zur Regelung der Netzstromaufnahme, eine Gleichrichtereinrichtung sowie einen Schaltregler aufweist. Der Schaltregler ist an die Gleichrichteranordnung angeschlossen. Weiterhin ist an seinen Ausgangsklemmen eine Last anschließbar, an der eine Ausgangsspannung abgreifbar ist. Die Ausgangsspannung wie von einer Meßanordnung abgegriffen und einem Pulsweitenmodulator zugeführt, der ein Regelsignal erzeugt und den Schaltregler steuert. Ferner wird dieses Regelsignal nach Wichtung in einem Frequenzteiler dem Power-Factor-Controller zugeführt, um die dem Schaltregler zugeführte Spannung annähernd konstant zu halten. Hierdurch kann der AC-DC-Konverter über einen großen Eingangsspannungsbereich betrieben werden.

Aufgabe der vorliegenden Erfindung ist es daher, ein Schaltnetzteil mit sinusförmiger Netzstromaufnahme und möglichst lastunabhängiger Gleichspannung an den Ausgangsklemmen des Schaltreglers bereit zu stellen, bei welchem die Leistungsregelanordnung nahezu verzögerungsfrei auf Laständerungen am Ausgang des Schaltreglers reagiert.

Erfindungsgemäß wird diese Augabe mit den Merkmalen des Patentanspruchs 1 gelöst.

Neben einem von der Bus-Spannung abhängigen ersten Bus-Spannungssignals, welches nach Integration an die Leistungsregelanordnung zurückgekoppelt ist, wird bei dem erfindungsgemäßen Schaltnetzteil zusätzlich ein von der Ausgangsspannung abhängiges zweites Regelsignal über einen zweiten Rückkopplungszweig an die Leistungsregelanordnung zurückgekoppelt, wobei in dem zweiten Rückkopplungszweig kein Integrierer notwendig ist. Die Leistungsregelanordnung kann so nahezu ohne Zeitverzögerung auf Laständerungen an den Ausgangsklemmen des Schaltreglers mit Änderung der Leistungsabgabe an die Gleichrichteranordnung reagieren.

Vorteilhafte Ausgestaltungen der Erfindung sind Gegenstand der Unteransprüche.

Vorteilhafterweise weist die Leistungsregelanordnung einen parallel zu deren Ausgangsklemmen angeordneten Leistungsschalter auf, der gesteuert durch Ansteuerimpulse geöffnet oder geschlossen ist. Ein geöffneter Schalter bedeutet einen Stromfluß von der Leistungsregelanordnung zu der Gleichrichteranordnung, während ein geschlossener Leistungsschalter den Ausgang der Leistungsregelanordnung kurzschließt, wodurch kein Strom in Richtung der Gleichrichteranordnung fließt und damit keine Leistung an diese abgegeben wird. Die an die Gleichrichteranordnung abgegebene Leistung läßt sich somit unter anderem abhängig von der Dauer der Ansteuerimpulse regulieren.

Nach einer weiteren Ausführungsform ist vorgesehen, daß die Leistungsregelanordnung eine Subtrahieranordnung und einen Pulsweitenmodulator aufweist, wobei an einem Ausgang des Pulsweitenmodulators die Ansteuerimpulse anliegen und ein Ausgang der Subtrahieranordnung mit einem Eingang des Pulsweitenmodulators verbunden ist. An einem ersten Eingang der Subtrahieranordnung liegt hierbei ein intern erzeugtes Stromsignal und an einem zweiten Eingang ein Steuersignal an. Das Stromsignal ist abhängig von dem tatsächlich in die Leistungsregelanordnung fließenden Strom. Das Steuersignal ist je nach Ausführungsform der Erfindung entweder immer ein intern erzeugtes Referenzsignal, welches durch ein an einem Ausgang des ersten Rückkopplungszweiges anliegendes zweites Bus-Spannungssignal und ein am Ausgang des zweiten Rückkopplungszweiges anliegendes zweites Ausgangssignal gewichtet ist, oder das Steuersignal ist abhängig von dem ersten oder zweiten Ausgangssignal entweder das in der beschriebenen Weise gewichtete Referenzsignal oder das erste Bus-Spannungssignal.

So sieht eine Ausführungsform der Erfindung vor, daß die Leistungsregelanordnung eine Multiplizieranordnung mit drei Eingängen aufweist, an welchen das intern erzeugte Referenzsignal, das am Ausgang des zweiten Rückkopplungszweiges anliegende zweite Ausgangssignal und das am Ausgang des ersten Rückkopplungszweiges anliegende zweite Bus-Spannungssignal anliegen. Ein Ausgang der Multiplizieranordnung ist bei dieser Ausführungsform direkt mit dem zweiten Eingang der Subtrahieranordnung verbunden. Das Referenzsignal, welches durch Multiplikation mit dem zweiten Ausgangssignal und dem zweiten Bus-Spannungssignal gewichtet ist, gibt die Signalform der gewünschten Netzstromaufnahme, in den meisten Fällen eine Sinusfunktion oder eine Sinusbetragfunktion, wieder. Das am Eingang des Pulsweitenmodulators anliegende Signal ergibt sich als Differenz des gewichteten Referenzsignals und des Stromsignals, die Ansteuerung des Leistungsschalters erfolgt somit abhängig von der Abweichung der tatsächlichen Stromaufnahme von der gewünschten Stromaufnahme der Leistungsregelanordnung.

Nach einer weiteren Ausführungsform ist vorgesehen, daß die Leistungsregelanordnung zusätzlich zu der Multiplizieranordnung einen Wechselschalter aufweist, wobei eine Ausgangsklemme des Wechselschalters mit dem zweiten Eingang der Subtrahieranordnung, eine erste Eingangsklemme des Wechselschalters mit dem Ausgang der Multiplizieranordnung und eine zweite Eingangsklemme des Wechselschalters mit dem Ausgang der ersten Meßanordnung verbunden ist. Das Umschalten des Wechselschalters erfolgt vorzugsweise abhängig von dem ersten oder zweiten Ausgangssignal. Das Umschalten des Wechselschalters erfolgt derart, daß bei geringen an Verbraucher abgegebenen Leistungen und Leistungsaufnahmen des Schaltnetzteils, welche unter dem Leistungsgrenzwert liegen, ab welchem eine sinusförmige Netzstromaufnahme gefordert ist, das Steuersignal direkt durch das zweite Bus-Spannungssignal gebildet ist, während bei größeren Leistungsaufnahmen, bei welchen eine sinusförmige Netzstromaufnahme gefordert ist, das Steuersignal durch das gewichtete Referenzsignal gebildet wird.

Um bei einer Ausführungsform ohne Wechselschalter zu verhindern, daß das Steuersignal Null wird, weist der zweite Rückkopplungszweig Mittel zur Addition eines Offsetsignals zu dem ersten Ausgangssignal auf.

Vorzugsweise sind der Pulsweitenmodulator, die Multiplizieranordnung und die Subtrahieranordnung der Leistungsregelanordnung, eine Steuerschaltung des Schaltreglers und der zweite Rückkopplungszweig in einer Halbleiterschaltung monolithisch integriert. Das von der zweiten Meßanordnung gelieferte erste Ausgangssignal dient sowohl in der Steuerschaltung des Schaltreglers zur Erzeugung von Steuersignalen für einen im Schaltregler enthaltenen zweiten Leistungsschalter, als auch über den zweiten Rückkopplungszweig zurückgekoppelt in der Leistungsregelanordnung zur Erzeugung von Ansteuerimpulsen für den Leistungsschalter. Durch monolithische Integration der genannten Elemente in einer Halbleiterschaltung werden insbesondere Schnittstellenprobleme und Synchronisationsprobleme vermieden, die sich bei Integration der genannten Elemente in unterschiedlichen Halbleiterschaltungen ergeben.

Die Leistungsregelanordnung weist vorzugsweise einen Brükkengleichrichter parallel zu den Anschlußklemmen der Leistungsregelanordnung auf, wobei eine Induktivität in Reihe zu Ausgangsklemmen des Brückengleichrichters geschaltet ist.

Die Gleichrichteranordnung weist bevorzugt eine in Reihe zu deren Eingang geschaltete Diode und einen parallel zu deren Ausgangsklemmen geschalteten Kondensator auf. Diese so gestaltete Gleichrichteranordnung ist einfach zu realisieren und effektiv in ihrer Wirkung.

Zur Bereitstellung des Stromsignals besitzt die Leistungsregelanordung einen ersten Stromfühlwiderstand, an dessen Klemmen eine zu dem in der Leistungsregelanordnung fließenden Strom proportionale Spannung abgreifbar ist. Der erste Stromfühlwiderstand ist vorzugsweise in Reihe zu der Induktivität geschaltet. Weiterhin weist die Stromregelanordnung einen zweiten Stromfühlwiderstand, der mit einer Klemme mit einer der Ausgangsklemmen des Brückengleichrichters verbunden ist, zur Bereitstellung des Referenzsignals auf.

Die erste Meßanordnung zur Bereitstellung des ersten Bus-Spannungssignals besitzt vorzugsweise einen parallel zu den Ausgangsklemmen der Gleichrichteranordnung geschalteten Spannungsteiler, an welchem eine Spannung abgreifbar ist, von der das erste Bus-Spannungssignal abhängig ist.

Vorzugsweise ist in der Leistungsregelanordnung eine zweite Induktivität so geschaltet, daß sie die Induktivität zu einem Übertrager ergänzt, wobei der zweiten Induktivität eine zweite Gleichrichteranordnung nachgeschaltet ist. Diese zweite Gleichrichteranordnung dient zur Spannungsversorgung der zu der Leistungsregelanordnung bzw. dem Schaltregler gehörigen Steuerlogik.

Die Erfindung wird nachfolgend im Zusammenhang mit Ausführungs-beispielen anhand von Figuren näher erläutert. Es zeigen:
- Figur 1: Blockschaltbild eines erfindungsgemäßen Schaltnetzteils,
- Figur 2: Schaltbild eines ersten Ausführungsbeispiels des Schaltnetzteils,
- Figur 3: Schaltbild eines zweiten Ausführungsbeispiels des Schaltnetzteils.

In den Figuren bezeichnen, sofern nicht anders angegeben, gleiche Bezugszeichen gleiche Signale und Bauteile mit gleicher Bedeutung.

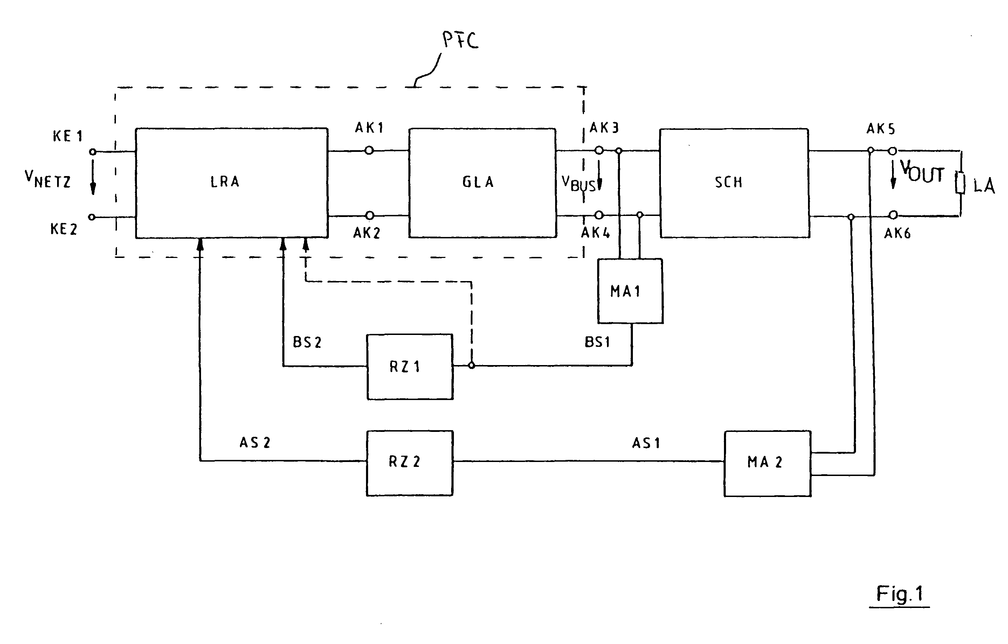

Figur 1 zeigt ein Blockschaltbild des Schaltnetzteils nach der Erfindung. Dargestellt sind eine Leistungsregelanordnung LRA mit einer ersten und zweiten Anschlußklemme KE1, KE2, zwischen welchen eine Netzspannung V_{NETZ} anliegt, und einer ersten und zweiten Ausgangsklemme AK1, AK2. An den Ausgangsklemmen AK1, AK2 der Leistungsregelanordnung LRA ist eine Gleichrichteranordnung GLA angeschlossen, die eine erste und zweite Ausgangsklemme AK3, AK4 aufweist, zwischen welchen eine Bus-Spannung V_{BUS} anliegt. Die Leistungsregelanordnung LRA und die Gleichrichteranordnung GLA bilden zusammen den PFC-Controller PFC, der der Verbesserung des Leistungsfaktors dient. Der Gleichrichteranordnung GLA nachgeschaltet ist ein Schaltregler SCH mit einer ersten und zweiten Ausgangsklemme AK5, AK6, zwischen welchen eine Ausgangsspannung V_{OUT} abgreifbar ist und zwischen denen eine Last LA angeordnet ist.

Eine erste Meßanordnung MA1 mit Eingangsklemmen, zwischen denen die Bus-Spannung V_{BUS} anliegt, liefert an ihrem Ausgang ein von der Bus-Spannung V_{BUS} abhängiges erstes Regelsignal BS1, welches über einen ersten Rückkopplungszweig RZ1 an die Leistungsregelanordnung LRA zurückgekoppelt ist, wobei am Ausgang des ersten Rückkopplungszweiges RZ1 ein Bus-Spannungssignal BS2 zur Verfügung steht. Eine derartige Regelung wird allgemein auch als Störgrößenvoraufschaltung (engl.: Feed Forward Control) bezeichnet.

Das Schaltnetzteil weist weiterhin eine zweite Meßanordnung MA2 mit einer ersten und zweiten Eingangsklemme auf, die mit der ersten und zweiten Ausgangsklemme AK5, AK6 des Schaltreglers SCH verbunden sind. An einem Ausgang der zweiten Meßanordnung MA2 steht ein von der Ausgangsspannung V_{OUT} abhängiges Regelsignal AS1 zur Verfügung. Das zweite Regelsignal AS1 ist über einen zweiten Rückkopplungszweig RZ2 an die Leistungsregelanordnung LRA zurückgekoppelt, wobei an einem Ausgang des zweiten Rückkopplungszweiges RZ2 ein Ausgangssignal AS2 anliegt. Eine Ausführungsform des Schaltnetzteils sieht vor, daß neben dem Bus-Spannungssignals BS2 auch das erste Regelsignal BS1 an einem Eingang der Leistungsregelanordnung anliegt. Diese Rückkopplung ist in Figur 1 gestrichelt dargestellt.

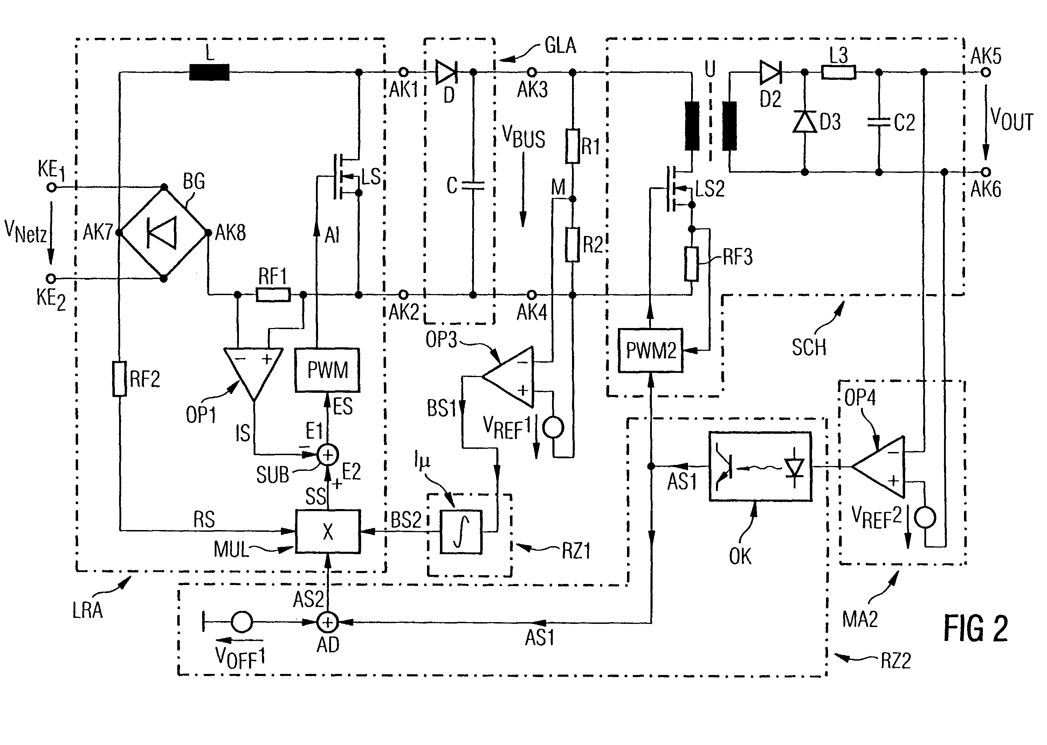

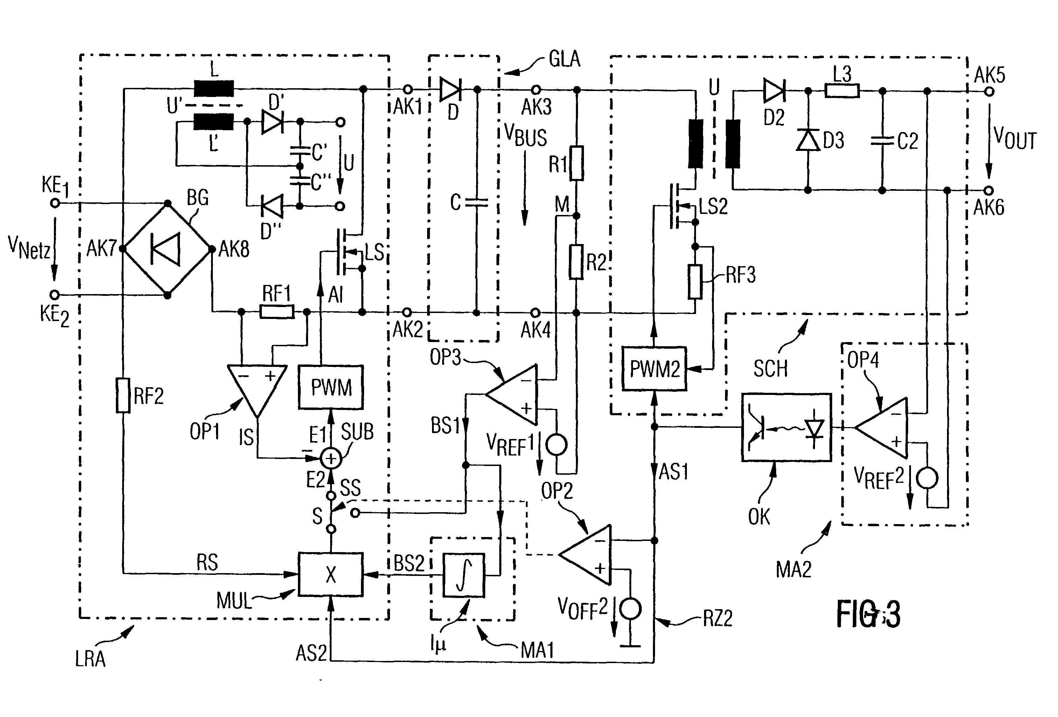

Die Figuren 2 und 3 zeigen Ausführungsbeispiele des in Figur 1 im Blockschaltbild dagestellten Schaltnetzteils, wobei in den Figuren 2 und 3 der Aufbau der einzelnen Funktionsblöcke detailliert dargestellt ist.

Die dargestellten Leistungsregelanordnungen LRA weisen einen Brückengleichrichter BG auf, der parallel zu der ersten und zweiten Anschlußklemme KE1, KE2 geschaltet ist, wobei sich eine Induktivität L in Reihe zu Ausgangsklemmen AK7, AK8 des Brückengleichrichters BG befindet. Die Leistungsregelanordnungen LRA weisen weiterhin einen Leistungsschalter LS auf, welcher parallel zu der ersten und zweiten Ausgangsklemme AK1, AK2 der Leistungsregelanordnung geschaltet ist und welcher gesteuert durch Ansteuerimpulse AI geöffnet oder geschlossen ist.

Die Erzeugung der Ansteuerimpulse AI erfolgt durch einen Pulsweitenmodulator PWM, der die Ansteuerimpulse AI in einem Oszillatortakt erzeugt, wobei die Dauer der Ansteuerimpulse AI abhängig von einem an einem Eingang des Pulsweitenmodulators PWM anliegenden Eingangssignal ES ist. Der Pulsweitenmodulator PWM ist in den vorliegenden Ausführungsbeispielen so gewählt, daß die Ansteuerimpulse AI um so länger sind, je größer das Eingangssignal ES ist und umgekehrt. Der Leistungsschalter LS ist solange geschlossen, solange ein Ansteuerimpuls AI anliegt.

Das Eingangssignal ES des Pulsweitenmodulators PWM ergibt sich bei beiden Ausführungsbeispielen aus der Differenz eines Steuersignals SS und einem Stromsignal IS, welche durch eine Subtrahieranordnung SUB gebildet wird, an deren erstem Eingang E1 das Stromsignal IS und an deren zweitem Eingang E2 das Steuersignal SS anliegt. Das Stromsignal IS ergibt sich aus dem Spannungsabfall an einem ersten Stromfühlwiderstand RF1, welcher in Reihe zu den Ausgangsklemmen AK7, AK8 des Brückengleichrichters BG geschaltet ist. Dieser Spannungsabfall ist direkt proportional zu dem nach dem Brückengleichrichter BG in der Leistungsregel-anordnung LRA fließenden Strom. Ein erster Operationsverstärker OP1 bildet aus dem an dem ersten Stromfühlwiderstand RF1 abgreifbaren Spannungsabfall das Stromsignal IS.

Das Steuersignal SS ergibt sich bei dem in Figur 2 dargestellten Ausführungsbeispiel aus der Multiplikation eines in der Leistungsregelanordnung LRA erzeugten Referenzsignals RS mit dem am Ausgang des ersten Rückkopplungszweiges RZ1 anliegenden Bus-Spannungssignals BS2 und mit am Ausgang des zweiten Rückkopplungszweiges RZ2 anliegenden Ausgangssignals AS2. Die Multiplikation erfolgt mittels einer Multiplizieranordnung MUL mit drei Eingängen, an welchen das Referenzsignal RS, das zweite Bus-Spannungssignal BS2 und das Ausgangssignal AS2 anliegen.

Bei dem in Figur 3 dargestellten Ausführungsbeispiel ergibt sich das Steuersignal entweder aus der Multiplikation des Referenzsignals RS mit dem Bus-Spannungssignal BS2 und dem Ausgangssignal AS2 oder aus dem ersten Bus-Spannungssignal BS1. Hierzu weist die Leistungsregelanordnung LRA einen Wechselschalter S auf, der mit einer Ausgangsklemme mit dem zweiten Eingang E2 der Subtrahieranordnung SUB verbunden ist, der mit einer Eingangsklemme mit einem Ausgang der Multiplizieranordnung MUL verbunden ist und der mit einer zweiten Eingangsklemme mit einem Ausgang der ersten Meßanordnung MA1 verbunden ist.

Das Umschalten des Wechselschalters S erfolgt in dem dargestellten Beispiel abhängig von dem ersten Ausgangssignal AS1. Hierzu wird ein Differenzsignal aus einem von einer zweiten Offsetspannungsquelle V_{OFF}2 gelieferten Offsetsignals und dem ersten Ausgangssignal AS1 durch einen zweiten Operationsverstärker OP2 gebildet und gegebenenfalls verstärkt. Das Umschalten erfolgt derart, daß bei Unterschreiten eines vorgegebenen Grenzwertes durch das zweite Regelsignal AS1 das Steuersignal SS durch das erste Bus-Spannungssignal gebildet wird, während bei Überschreiten des vorgegebenen Grenzwertes durch das erste Ausgangssignal AS1 das Steuersignal durch das Produkt aus Referenzsignal RS, Ausgangssignal AS2 und Bus-Spannungssignal BS2 gebildet wird.

Das Referenzsignal RS ergibt sich bei beiden Ausführungsbeispielen am Ausgang eines zweiten Stromfühlwiderstands RF2, welcher mit einer Klemme mit der ersten Ausgangsklemme AK7 des Brückengleichrichters BG verbunden ist.

Die Gleichrichteranordnung besteht in beiden Ausführungsbeispielen aus einer Diode D, welche in Reihe zu einem Eingang der Gleichrichteranordnung GLA geschaltet ist und aus einem Kondensator C, der parallel zu der ersten und zweiten Ausgangsklemme AK3, AK4 der Gleichrichteranordnung GLA geschaltet ist.

Die erste Meßanordnung MA1 weist einen Spannungsteiler bestehend aus einer Reihenschaltung eines ersten und zweiten Widerstands R1, R2 auf, die parallel zu der ersten und zweiten Ausgangsklemme AK3, AK4 der Gleichrichteranordnung GLA geschaltet ist. Die erste Meßanordnung MA1 besitzt einen Mittenabgriff M, der mit einem Eingang eines dritten Operationsverstärkers OP3 verbunden ist. Zwischen der zweiten Ausgangsklemme AK4 der Gleichrichteranordnung GLA und einem zweiten Eingang des dritten Operationsverstärkers OP3 ist eine erste Referenzspannungsquelle V_{REF}1 geschaltet. Am Ausgang des dritten Operationsverstärkers OP3 liegt das erste Regelsignal BS1 an, welches sich aus der Differenz der Referenzspannung V_{REF}1 und der zwischen dem Mittenabgriff M und der zweiten Ausgangsklemme AK4 abgreifbaren Spannung ergibt. Das erste Regelsignal BS1 ist somit umso kleiner, je größer die zwischen dem Mittenabgriff M und der zweiten Ausgangsklemme AK4 anliegende Spannung bzw. je größer die Bus-Spannung V_{BUS} ist.

Die Rückführung des ersten Bus-Spannungssignals BS1 an die Multiplikationsanordnung MUL der Leistungsregelanordnung LRA erfolgt mittels eines zweiten Rückkopplungszweiges RZ2, der bei beiden dargestellten Ausführungsbeispielen eine Integrieranordnung IN aufweist.

An den Anschlußklemmen AK3, AK4 der Gleichrichteranordnung GLA ist ein Schaltregler SCH angeschlossen, der im wesentlichen aus einem Übertrager Ü, einem in Reihe zu einer primärseitigen Spule des Übertragers Ü geschalteten zweiten Leistungsschalter LS2 und einem in Reihe dazu geschalteten dritten Stromfühlwiderstand RF3 aufweist. Parallel zu einer sekundärseitigen Spule des Übertragers Ü ist eine dritte Gleichrichteranordnung bestehend aus zwei Dioden D2, D3, einer Induktivität .L3 und einem Kondensator C2 geschaltet. Der Schaltregler SCH weist weiterhin einen zweiten Pulsweitenmodulator PWM2 auf, der zweite Ansteuerimpulse AI2 zur Ansteuerung des zweiten Leistungsschalters LS2 abhängig von dem zweiten Regelsignal AS1 erzeugt.

Die in den Fig. 2 und 3 dargestellte zweite Meßanordnung MA2 weist einen vierten Operationsverstärker OP4 auf, der mit einer ersten Eingangsklemme mit der ersten Ausgangsklemme AK5 des Schaltreglers SCH verbunden ist. Zwischen einer zweiten Eingangsklemme des vierten Operationsverstärkers OP4 und der zweiten Ausgangsklemme AK6 des Schaltreglers SCH ist eine zweite Referenzspannungsquelle V_{REF}2 geschaltet. An einem Ausgang des vierten Operationsverstärkers OP4 liegt das zweite Regelsignal AS1 an, welches sich aus dem Differenzsignal der zweiten Referenzspannung V_{REF}2 und der Ausgangsspannung V_{OUT} ergibt, das gegebenenfalls durch den vierten Operationsverstärker OP4 verstärkt ist. Das zweite Regelsignal AS1 ist somit umso kleiner, je größer die Ausgangsspannung V_{OUT} ist.

Wie in den Fig. 2 und 3 angedeutet, besteht die Möglichkeit, das zweite Regelsignal AS1 potentialfrei, beispielsweise mittels eines Optokopplers OK, von der zweiten Meßanordnung MA2 an den Schaltregler SCH und an den zweiten Rückkopplungszweig RZ2 zu übertragen.

Der in Fig. 2 dargestellte zweite Rückkopplungszweig RZ2 weist zusätzlich eine erste Offsetspannungsquelle V_{OFF}1 und einen Addierer AD zur Addition eines Offsetsignals zu dem zweiten Regelsignal AS1 auf, um zu verhindern, daß das Ausgangssignal AS2 und damit das Steuersignal SS Null wird.

Die Funktionsweise des erfindungsgemäßen Schaltnetzteils wird nachfolgend anhand des in Fig. 2 dargestellten Ausführungsbeispiels unter Annahme einer sinusförmigen Netzspannung V_{NETZ} beschrieben.

Bei Anliegen eines Ansteuerimpulses AI an dem Leistungsschalter LS wird dieser geschlossen und es fließt ein Strom über die erste Ausgangsklemme AK7 des Brückengleichrichtes BG, die Induktivität L, den Leistungsschalter LS, den ersten Stromfühlwiderstand RF1 und die zweite Ausgangsklemme AK8 des Brückengleichrichters BG. Die an den Ausgangsklemmen AK1, AK2 der Leistungsregelanordnung anliegende Spannung ist bei geschlossenem Leistungsschalter LS nahezu Null. Nach Beendigung eines Ansteuerimpulses AI und Öffnen des Leistungsschalters LS fließt ein Strom über die Induktivität L in die Gleichrichteranordnung GLA, in der der Kondensator C über die Diode D aufgeladen wird. Die an den Ausgangsklemmen AK1, AK2 der Leistungsregelanordnung LRA anliegende Spannung ergibt sich bei geöffnetem Leistungsschalter LS, unter Vernachlässigung der an dem ersten Stromfühlwiderstand RF1 abfallenden Spannung, aus der Addition der an den Ausgangsklemmen AK7, AK8 anliegenden Spannung und der an der Induktivität L anliegenden Spannung, welche von der Energie abhängt, die bei geschlossenem Leistungsschalter LS in die Induktivität L gespeichert wurde.

Da die Frequenz, mit welcher die Ansteuerimpulse AI erzeugt werden, um mehrere Zehnerpotenzen über der maximalen Frequenz der an den Ausgangsklemmen AK7, AK8 des Brückengleichrichtes BG anliegenden Spannung liegt, kann diese Spannung für die Dauer der Ansteuerimpulse annähernd als konstant angenommen werden. Es gilt somit, daß die von der Induktivität L bei geschlossenem Leistungsschalter LS aufgenommene Energie, welche bei geöffneten Leistungsschalter LS an den Kondensator C abgegeben wird, umso größer ist, je länger der Leistungsschalter LS geschlossen ist, je länger also die Ansteuerimpulse AI sind.

Aufgabe der Leistungsregelanordnung LRA ist es einerseits, für eine möglichst sinusförmige Netzstromaufnahme zu sorgen und andererseits, die an die Gleichrichteranordnung GLA abgegebene Leistung so zu regeln, daß eine möglichst konstante Bus-Spannung V_{BUS} vorliegt. Unter der Annahme, daß sich das Stromsignal IS schnell im Verhältnis zu dem Bus-Spannungssignal BS2 und dem Ausgangssignal AS2 ändert, soll die Regelung des Eingangsstroms im folgenden für ein konstantes Bus-Spannungssignal BS2 und ein konstantes Ausgangssignal AS2 betrachtet werden. Das Steuersignal SS stellt dann lediglich ein mit einem konstanten Faktor gewichtetes Referenzsignal RS dar. Das Eingangssignal ES des Pulsweitenmodulators PWM ergibt sich dann aus der Differenz des gewichteten Referenzsignals RS mit dem Stromsignal IS. Der Pulsweitenmodulator PWM ist so gewählt, daß die Dauer der vom ihm erzeugten Ansteuerimpulse AI umso länger ist, je größer das Eingangssignal ES ist.

Weicht das Stromsignal IS, welches den tatsächlich in der Leistungsregelanordnung LRA fließenden Strom wiedergibt, stark von dem Referenzsignal RS, welches im vorliegenden Fall eine ideale Sinusbetragsfunktion ist, ab, so erzeugt der Pulsweitenmodulator PWM Ansteuerimpulse AI von größerer Dauer, so daß die Stromaufnahme bei geschlossenem Leistungsschalter LS steigt. Ist umgekehrt die Differenz zwischen dem gewichteten Referenzsignal RS und dem Stromsignal IS klein, erzeugt der Pulsweitenmodulator PWM kurze Ansteuerimpulse AI, der Leistungsschalter LS bleibt für kürzere Zeitdauer geschlossen, so daß die Stromaufnahme nicht so stark ansteigen kann.

Während sich das Referenzsignal RS bei einer Netzfrequenz von 50 Hz mit einer Frequenz von 100 Hz ändert, ändert sich die durch das Bus-Spannungssignal BS2 und das Ausgangssignal AS2 hervorgerufene Gewichtung des Referenzsignals im Verhältnis dazu sehr langsam. Ein Absinken der Last an den Ausgangsklemmen AK5, AK6 des Schaltreglers SCH bedeutet ein Ansteigen der Ausgangsspannung V_{OUT}, die sich sofort in einem Absinken des Ausgangssignals AS2 auswirkt, und ein Ansteigen der Bus-Spannung V_{BUS}, die sich bedingt durch die Integration zeitverzögert in einem Absinken des zweiten Bus-Spannungssignals auswirkt. Sinkt nun das Bus-Spannungssignal BS2 oder das Ausgangssignal AS2 ab, so verringert sich auch das Eingangssignal ES, der Pulsweitenmodulator PWM erzeugt damit kürzere Ansteuerimpulse, die von der Induktivität L während der Dauer der Ansteuerimpulse aufgenommene Energie verringert sich und damit verringert sich die nach Beendigung der Ansteuerimpulse an den Kondensator C abgegebene Energie.

Die Leistungsregelanordnung LRA sorgt also bei ansteigender Bus-Spannung V_{BUS} oder ansteigender Ausgangsspannung V_{OUT} für eine Verringerung der Leistungsabgabe an die Gleichrichteranordnung GLA und den Schaltregler SCH. Der Vorteil der vorliegenden Erfindung liegt in einer schnelleren Regelung der Leistungsabgabe, da Änderungen der Ausgangsspannung V_{OUT} ohne Verzögerung an die Leistungsregelanordnung LRA zurückgeführt werden.

Das in Fig. 3 dargestellte Schaltnetzteil weist weiterhin eine zweite Induktivität L' auf, welche die Induktivität der Leistungsregelanordnung LRA zu einem zweiten Übertrager Ü' ergänzt. Parallel zu der zweiten Induktivität L' ist eine aus zwei Dioden D', D2'' und zwei Kondensatoren C', C2'' bestehende zweite Gleichrichteranordnung geschaltet, an derem Ausgang eine Versorgungsspannung U abgreifbar ist. Die Versorgungsspannung U kann mittels hier nicht näher dargestellte Verbindungen zur Spannungsversorgung der Steuerlogik der Leistungsregelanordnung LRA bzw. des Schaltreglers SCH dienen. Da bei dem erfindungsgemäßen Schaltnetzteil die Leistungsregelanordnung nicht bedingt durch Überlast abgeschaltet werden muß, ist eine ständige Spannungsversorgung der Steuerlogik gewährleistet.

## Patentansprüche

1. Schaltnetzteil mit folgenden Merkmalen:
(a) mindestens einen Power-Factor-Controller (PFC),
(a1) der eine Leistungsregelanordnung (LRA) zur Regelung der sinusförmigen Netzstromaufnahme und eine Gleichrichteranordnung (GLA) aufweist,
(a2) mit zwei Eingangsanschlüssen (KE1,KE2), an welchen eine Netzspannung (V_{Netz}) in das Schaltnetzteil einkoppelbar ist und
(a3) mit zwei Ausgangsklemmen (AK3,AK4), an welchen eine Bus-Spannung (V_{BUS}) abgreifbar ist,
(b) einen an den Ausgangsklemmen (AK3, AK4) der Gleichrichteranordnung (GLA) angeschlossenen Schaltregler (SCH), an dessen Ausgangsklemmen (AK5, AK6) eine Ausgangsspannung (V_{OUT}) abgreifbar ist,
(c) eine dem Schaltregler (SCH) nachgeschaltete, zwischen dessen Ausgangsklemmen (AK5, AK6) angeordnete Last (LA),
(d) mit einer ersten Meßanordnung (MA1) zum Bereitstellen eines von der Bus-Spannung (V_{BUS}) abhängigen ersten Regelsignals (BS1) vorgesehen ist,
(e) mit einer Störgrößenvoraufschaltung, die einen ersten Rückkopplungszweig (RZ1) mit einer Integrieranordnung (IN) zur Rückkopplung des ersten Regelsignals (BS1) an die Leistungsregelanordnung (LRA) aufweist, und
(f) eine zweite Meßanordnung (MA2) vorgesehen ist, die bei einer Änderung der Leistungsaufnahme der Last (LA) ein zweites Regelsignal (AS1) erzeugt, das über einen zweiten Rückkopplungszweig (RZ2) in die Leistungsregelanordnung (LRA) einkoppelbar ist.

2. Schaltnetzteil nach Anspruch 1, wobei mit einer den zweiten Rückkopplungszweig (RZ2) enthaltenden zweiten Regelschleife und mit einer den ersten Rückkopplungszweig (RZ1) enthaltenden ersten Regelschleife, wobei die zweite Regelschleife eine Signaländerung sehr viel schneller ausregelt als die erste Regelschleife.

3. Schaltnetzteil nach einem der vorherigen Ansprüche, wobei die Leistungsregelanordnung (LRA) einen parallel zu deren Ausgangsklemmen (AK1, AK2) angeordneten Leistungsschalter (LS) aufweist, der gesteuert durch Ansteuerimpulse (AI) geöffnet oder geschlossen ist.

4. Schaltnetzteil nach Anspruch 3, wobei die Leistungsregelanordnung (LRA) eine Subtrahieranordnung (SUB) und einen Pulsweitenmodulator (PWM) aufweist, wobei an einem Ausgang des Pulsweitenmodulators (PWM) die Ansteuerimpulse (AI) anliegen, ein Ausgang der Subtrahieranordnung (SUB) mit einem Eingang des Pulsweitenmodulators (PWM) verbunden ist, und wobei an einem ersten Eingang (E1) der Subtrahieranordnung (SUB) ein intern erzeugtes Stromsignal (IS) und an einem zweiten Eingang (E2) ein Steuersignal (SS) anliegt.

5. Schaltnetzteil nach einem der vorherigen Ansprüche, wobei die Leistungsregelanordnung (LRA) eine Multiplizieranordnung (MUL) mit drei Eingängen aufweist, an welchen ein intern erzeugtes Referenzsignal (RS), ein am Ausgang des zweiten Rückkopplungszweiges (RZ2) anliegendes Ausgangssignal (AS2) und ein am Ausgang des zweiten Rückkopplungszweiges (RZ2) anliegendes Bus-Spannungssignal (BS2) anliegt.

6. Schaltnetzteil nach Anspruch 5, wobei ein Ausgang der Multiplizieranordnung (MUL) mit dem zweiten Eingang (E2) der Subtrahieranordnung (SUB) verbunden ist.

7. Schaltnetzteil nach einem der Ansprüche 5 oder 6, wobei die Leistungsregelanordnung (LRA) einen gesteuerten Wechselschalter (S) aufweist, dessen eine Ausgangsklemme mit dem zweiten Eingang (E2) der Subtrahieranordnung verbunden ist, der mit einer ersten Eingangsklemme mit dem Ausgang der Multiplizieranordnung (MUL) und der mit einer zweiten Eingangsklemme mit dem Ausgang der ersten Meßanordnung (MA1) verbunden ist.

8. Schaltnetzteil nach Anspruch 7, wobei die Steuerung des Wechselschalters (S) abhängig von dem zweiten Regelsignal (AS1) oder dem Ausgangssignal (AS2) erfolgt.

9. Schaltnetzteil nach einem der vorherigen Ansprüche, wobei der zweite Rückkopplungszweig (RZ2) Mittel (V_{OFF}1, AD) zur Addition eines Offsetsignals zu dem zweiten Regelsignal (AS1) aufweist.

10. Schaltnetzteil nach einem der vorangehenden Ansprüche, wobei der Pulsweitenmodulator (PWM), die Multiplizieranordnung (MUL), die Subtrahieranordnung (SUB), eine Steuerschaltung des Schaltreglers und der zweite Rückkopplungszweig (RZ2) monolithisch in einer Halbleiterschaltung integriert sind.

11. Schaltnetzteil nach einem der vorangehenden Ansprüche, wobei in der Leistungsregelanordnung (LRA) ein Brückengleichrichter (BG) parallel zu den Anschlußklemmen (KE1, KE2) geschaltet ist, wobei eine Induktivität (L) in Reihe zu Ausgangsklemmen (AK7, AK8) des Brückengleichrichters (BG) geschaltet ist.

12. Schaltnetzteil nach einem der vorangehenden Ansprüche, wobei die Gleichrichteranordnung (GLA) eine in Reihe zu deren Eingang geschaltete Diode (D) und einen parallel zu deren Ausgangsklemmen (AK3, AK4) geschalteten Kondensator (C) aufweist.

13. Schaltnetzteil nach einem der vorangehenden Ansprüche, wobei die Leistungsregelanordnung (LRA) einen ersten Stromfühlwiderstand (RF1) aufweist, an dessen Klemmen eine zu dem Stromsignal (IS) proportionale Spannung abgreifbar ist.

14. Schaltnetzteil nach einem der vorangehenden Ansprüche, wobei die Leistungsregelanordnung (LRA) einen zweiten Stromfühlwiderstand (RF2) zur Bereitstellung des Referenzsignals (RS) aufweist.

15. Schaltnetzteil nach einem der vorangehenden Ansprüche, wobei die erste Meßanordnung (MA1) aus einem parallel zu den Ausgangsklemmen (AK3, AK4) der Gleichrichteranordnung (GLA) geschalteten Spannungsteiler (R1, R2) besteht.

16. Schaltnetzteil nach einem der vorangehenden Ansprüche, wobei sie eine zweite Induktivität L' aufweist, welche die Induktivität L zu einem Übertrager ergänzt, wobei der zweiten Induktivität L' eine zweite Gleichrichteranordnung nachgeschaltet ist.

## Claims

1. Switched-mode power supply having the following features:
(a) at least one power factor controller (PFC),
(a1) which has a power regulating arrangement (LRA) for regulating the sinusoidal mains current consumption, and has a rectifier arrangement (GLA),
(a2) having two input connections (KE1, KE2), at which a mains voltage (Vₘₐᵢₙₛ) can be input into the switched-mode power supply, and
(a3) having two output terminals (AK3, AK4), at which a bus voltage (V_{BUS}) can be tapped off,
(b) a switched-mode regulator (SCH) which is connected to the output terminals (AK3, AK4) of the rectifier arrangement (GLA) and at whose output terminals (AK5, AK6) an output voltage (V_{OUT}) can be tapped off,
(c) a load (LA) which is connected downstream of the switched-mode regulator (SCH) and is arranged between its output terminals (AK5, AK6),
(d) having a first measurement arrangement (MA1) for providing a first regulating signal (BS1) which is dependent on the bus voltage (V_{BUS}),
(e) having feed forward control, which has a first feedback path (RZ1) with an integrator arrangement (IN) for feeding back the first regulating signal (BS1) to the power regulating arrangement (LRA), and
(f) a second measurement arrangement (MA2) is provided which, whenever the power consumption of the load (LA) changes, produces a second regulating signal. (AS1) which can be input into the power regulating arrangement (LRA) via a second feedback path (RZ2).

2. Switched-mode power supply according to Claim 1, having a second control loop which includes the second feedback path (RZ2) and having a first control loop which includes the first feedback path (RZ1), in which case the second control loop compensates for a signal change very much more quickly than the first control loop.

3. Switched-mode power supply according to one of the preceding claims, in which the power regulating arrangement (LRA) has a power switch (LS) which is arranged in parallel with the output terminals. (AK1, AK2) of the said power regulating arrangement (LRA) and is opened or closed controlled by drive pulses (AI).

4. Switched-mode power supply according to Claim 3, in which the power regulating arrangement (LRA) has a subtraction arrangement (SUB) and a pulse-width modulator (PWM), in which case the drive pulses (AI) are present at an output of the pulse-width modulator (PWM), one output of the subtraction arrangement (SUB) is connected to an input of the pulse-width modulator (PWM), and in which an internally produced current signal (IS) is applied to a first input (E1) of the subtraction arrangement (SUB), and a control signal (SS) is applied to a second input (E2).

5. Switched-mode power supply according to one of the preceding claims, in which the power regulating arrangement (LRA) has a multiplier arrangement (MUL) with three inputs, to which an internally produced reference signal (RS), an output signal (AS2) which is present at the output of the second feedback path (RZ2), and a bus voltage signal (BS2) which is present at the output of the second feedback path (RZ2) are applied.

6. Switched-mode power supply according to Claim 5, in which one output of the multiplier arrangement (MUL) is connected to the second input (E2) of the subtraction arrangement (SUB).

7. Switched-mode power supply according to either of Claims 5 or 6, in which the power regulating arrangement (LRA) has a controlled changeover switch (S), one of whose output terminals is connected to the second input (E2) of the subtraction arrangement and whose first input terminal is connected to the output of the multiplier arrangement (MUL) while its second input terminal is connected to the output of the first measurement arrangement (MA1).

8. Switched-mode power supply according to Claim 7, in which the changeover switch (S) is controlled as a function of the second regulating signal (AS1) or the output signal (AS2).

9. Switched-mode power supply according to one of the preceding claims, in which the second feedback path (RZ2) has means (V_{OFF}1, AD) for addition of an offset signal to the second regulating signal (AS1).

10. Switched-mode power supply according to one of the preceding claims, in which the pulse-width modulator (PWM), the multiplier arrangement (MUL), the subtraction arrangement (SUB), a control circuit of the switched-mode regulator and the second feedback path (RZ2) are integrated monolithically in a semiconductor circuit.

11. Switched-mode power supply according to one of the preceding claims, in which a bridge rectifier (BG) is connected in -parallel with the connecting terminals (KE1, KE2) in the power regulating arrangement (LRA), with an inductance (L) being connected in series with the output terminals (AK7, AK8) of the bridge rectifier (BG).

12. Switched-mode power supply according to one of the preceding claims, in which the rectifier arrangement (GLA) has a diode (D) connected in series with its input, and a capacitor (C) connected in parallel with its output terminals (AK3, AK4).

13. Switched-mode power supply according to one of the. preceding claims, in which the power regulating arrangement (LRA) has a first current sensing resistor (RF1) across whose terminals a voltage which is proportional to the current signal (IS) can be tapped off.

14. Switched-mode power supply according to one of the preceding claims, in which the power regulating arrangement (LRA) has a second current sensing resistor (RF2) in order to provide the reference signal (RS).

15. Switched-mode power supply according to one of the preceding claims, in which the first measurement arrangement (MA1) comprises a voltage divider (R1, R2) which is connected in parallel with the output terminals (AK3, AK4) of the rectifier arrangement (GLA).

16. Switched-mode power supply according to one of the preceding claims, in which the said switched-mode power supply has a second inductance L', which complements the inductance L to form a transformer, with a second rectifier arrangement being connected downstream of the second inductance L'.

## Revendications

1. Alimentation à découpage comportant les caractéristiques suivantes:
(a) au moins un Power-Factor-Controller (PFC),
(a1) qui comporte un dispositif (LRA) de régulation de puissance pour la régulation de la consommation de courant du secteur sinusoïdale et un dispositif (GLA) redresseur,
(a2) comportant deux bornes (KE1, KE2) d'entrée auxquelles une tension (V_{NETZ}) de secteur peut être appliquée à l'alimentation à découpage et
(a3) comportant deux bornes (AK3, AK4) de sortie auxquelles une tension (V_{BUS}) de bus peut être prélevée,
(b) un régulateur (SCH) de commande qui est raccordé aux bornes (AK3, AK4) de sortie du dispositif (GLA) redresseur et aux bornes (AK5, AK6) de sortie duquel une tension (V_{OUT}) de sortie peut être prélevée,
(c) une charge (LA) branchée en aval du régulateur (SCH) de commande et montée entre ses bornes (AK5, AK6) de sortie.
(d) comportant un premier dispositif (MA1) pour mettre à disposition un premier signal (BS1) de régulation dépendant de la tension (V_{BUS}) de bus,
(e) comportant une régulation anticipée qui comporte une première branche (RZ1) de rétrocouplage ayant un dispositif (IN) intégrateur pour le rétrocouplage du signal (BS1) de régulation au dispositif (LRA) de régulation de puissance, et
(f) un deuxième dispositif (MA2) de mesure, qui, en cas de variation de la consommation de puissance de la charge (LA), fournit un deuxième signal (AS1) de régulation qui peut être injecté par l'intermédiaire d'une deuxième branche (RS2) de rétrocouplage dans le dispositif (LRA) de régulation de puissance.

2. Alimentation à découpage suivant la revendication 1, comportant une deuxième boucle de régulation comportant la deuxième branche (RZ2) de rétrocouplage et comportant une première boucle de régulation comportant la première branche (RZ1) de rétrocouplage, la deuxième boucle de régulation régulant une variation de signal beaucoup plus rapidement que la première boucle de régulation.

3. Alimentation à découpage suivant l'une des revendications précédentes, le dispositif (LRA) de régulation de puissance comportant un disjoncteur (LS) qui est monté en parallèle à ses bornes (AK1, AK2) de sortie et qui est ouvert ou fermé en étant commandé par des impulsions (Al) de commande.

4. Alimentation à découpage suivant la revendication 3, le dispositif (LRA) de régulation de puissance comportant un dispositif (SUB) soustracteur et un modulateur (PWM) d'impulsions en largeur, les impulsions (Al) de commande s'appliquant à une sortie du modulateur (PWM) d'impulsions en largeur, une sortie du dispositif (SUB) soustracteur étant reliée à une entrée du modulateur (PWM) d'impulsions en largeur, et un signal (IS) de courant produit de manière interne s'appliquant à une première entrée (E1) du dispositif (SUB) soustracteur et un signal (SS) de commande s'appliquant à une deuxième entrée (E2).

5. Alimentation à découpage suivant l'une des revendications précédentes, le dispositif (LRA) de régulation de puissance comportant un dispositif (MUL) de multiplication à trois entrées, auquel s'applique un signal (RS) de référence produit de manière interne, un signal (AS2) de sortie s'appliquant à la sortie de la deuxième branche (RZ2) de rétrocouplage et un signal (BS2) de tension de bus s'appliquant à la sortie de la deuxième branche (RZ2) de rétrocouplage.

6. Alimentation à découpage suivant la revendication 5, une sortie du dispositif (MUL) multiplicateur étant reliée à la deuxième entrée (E2) du dispositif (SUB) soustracteur.

7. Alimentation à découpage suivant l'une des revendications 5 ou 6, le dispositif (LRA) de régulation de puissance comportant un commutateur (S) inverseur commandé, dont l'une des bornes de sortie est reliée à la deuxième entrée (E2) du dispositif soustracteur, qui est relié par une première borne d'entrée à la sortie du dispositif (MUL) multiplicateur et qui est relié par une deuxième borne d'entrée à la sortie du premier dispositif (MA1) de mesure.

8. Alimentation à découpage suivant la revendication 7, la commande du commutateur (S) inverseur s'effectuant en fonction du deuxième signal (AS1) de régulation ou du signal (AS2) de sortie.

9. Alimentation à découpage suivant l'une des revendications précédentes, la deuxième branche (RZ2) de rétrocouplage comportant des moyens (V_{OFF}¹, AD) pour additionner un signal de décalage au deuxième signal (AS1) de régulation.

10. Alimentation à découpage suivant l'une des revendications précédentes, le modulateur (PWM) d'impulsions en largeur, le dispositif (MIL) multiplicateur, le dispositif (SUB) soustracteur, un circuit de commande du régulateur de commande et la deuxième branche (RZ2) de rétrocouplage étant intégrés de manière monolithique à un circuit à semi-conducteur.

11. Alimentation à découpage suivant l'une des revendications précédentes, un redresseur (BG) en pont étant branché dans le dispositif (LRA) de régulation de puissance en parallèle avec les bornes (KE1, KE2) de raccordement, une inductance (L) étant branchée en série avec les bornes (AK7, AK8) de sortie du redresseur (BG) en pont.

12. Alimentation à découpage suivant l'une des revendications précédentes, le dispositif (GLA) redresseur comportant une diode (D) branchée en série avec son entrée et un condensateur (C) branché en parallèle avec ses bornes (AK3, AK4) de sortie.

13. Alimentation à découpage suivant l'une des revendications précédentes, le dispositif (LRA) de régulation de puissance comportant une première résistance (RF1) de détection du courant aux bornes de laquelle une tension proportionnelle au signal (IS) de courant peut être prélevée.

14. Alimentation à découpage suivant l'une des revendications précédentes, le dispositif (LRA) de régulation de puissance comportant une deuxième résistance (RF2) de détection du courant pour la mise à disposition du signal (RS) de référence.

15. Alimentation à découpage suivant l'une des revendications précédentes, le premier dispositif (MA1) de mesure étant constitué d'un diviseur (R1, R2) de tension branché en parallèle avec les bornes (AK3, AK4) de sortie du dispositif (GLA) redresseur.

16. Alimentation à découpage suivant l'une des revendications précédentes, qui comporte une deuxième inductance L' qui complète l'inductance L pour former un transmetteur, un deuxième dispositif redresseur étant monté en aval de la deuxième inductance L'.
